# EUROPEAN PATENT SPECIFICATION

(11) **EP 1 566 923 B1**
(45) Date of publication and mention of the grant of the patent: **11.04.2012**
(21) Application number: 05101094.0
(22) Date of filing: 14.02.2005
(51) Int. Cl.: H04L 12/28

(54) **Method of communication between domestic appliances and appliances implementing the method**
Verfahren zur Kommunikation zwischen Hausgeräten und Geräte zur Durchführung des Verfahrens
Méthode de communication entre des appareils domestiques et appareils implémentant la méthode

(30) Priority: 23.02.2004 FR 0401780
(43) Date of publication of application: 24.08.2005
(73) Proprietor: Thomson Licensing, 92130 Issy-les-Moulineaux (FR)
(72) Inventor: Bassi, Thierry, Boulogne Cedex, 92648 (FR)
(74) Representative: Le Dantec, Claude

(56) References cited:
- EP-A- 1 337 062
- WO-A-01/80030
- GB-A- 2 387 090
- US-A1- 2003 097 563

## Description

The present invention relates to the field of digital decoders and more precisely to the use of several decoders in the home using the same subscription.

Multimedia service operators distribute their services according to several transmission networks. Among these networks may be cited satellite, cable and digital terrestrial distribution networks. These various distribution networks share the common feature of conveying transport streams up to an appliance, the network entry point, in the home. The services are thereafter distributed within the home on a cable to the various places where the subscriber wishes to be able to receive the services to which he has signed up. Reception proper is performed by means of an appliance called a digital decoder whose function is to verify the subscriber's access entitlements to the services and to decode those for which the subscriber possesses entitlements.

In his home, the subscriber often possesses several receivers with which he can view the services distributed. The problem then arises of allowing the subscriber to decode the services to which he has subscribed at several places in his home. Distribution downstream of the decoder of the service decoded is one solution but only makes it possible to transmit a single service into the home, the one which is decoded at a given moment by the single decoder. This implies that everybody in the home is viewing the same service. If one wants to make it possible at each service viewing point, in the home, to view any service independently of the services viewed on the other viewing points, it is necessary to use several decoders in the home, one decoder per viewing point, each decoder being able to decode any one of the services distributed independently of the services decoded by the other decoders in the home. Accordingly, it is therefore possible to use in a home several decoders using the particulars of a single subscription. However, if decoders able to reuse the particulars of one and the same subscription are distributed in this way, it becomes easy to reuse such a second decoder, not now in the subscriber's home, but in another home by somebody who has not signed up to the service.

The document WO 01/80030A discloses a system and method for communication between subscriber's devices over cable infrastructure designed to carry video signals.

The invention sets out to make it possible to distribute multiple decoders usable in the home of a subscriber. The decoders using one and the same subscription will have to communicate with one another to operate. This communication is facilitated by the cable allowing the transmission of services into the home. The emission and reception power of the signals implementing this communication is managed in such a way as to preclude this communication between two neighbouring homes by the service distribution equipment, in the case of a communal distribution of these services.

The claims 1 and 8 define the invention, with the dependent claims defining corresponding embodiments.

The invention will be better understood and other features and advantages will become apparent on reading the description which follows, the description making reference to the appended drawings among which:
Figure 1 represents the diagram of a typical installation for communal distribution of services which will help us to describe the exemplary embodiment.
Figure 2 represents the various thresholds of power levels used in the exemplary embodiment of the invention.
Figure 3 represents a diagram of parties illustrating the exchanges between a master and a slave.
Figure 4 represents a diagram of parties illustrating stream control.

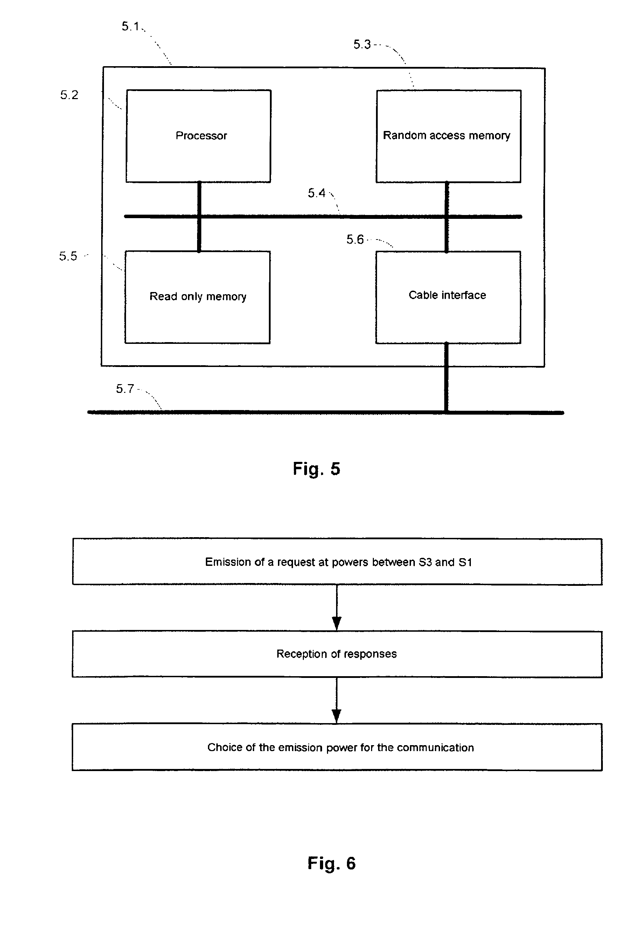

Figure 5 represents the general architecture of a domestic appliance connected to a cable network.
Figure 6 represents a chart of the main steps of the method for managing the emission power level.

The exemplary embodiment which follows explains the manner in which decoders will be paired within a home in such a way as to allow them to converse with one another. Although the standpoint of the exemplary embodiment is that of digital decoders, the invention is not limited to appliances of this type and can be used regardless of the type of domestic appliance. A protocol is defined so as to effectively facilitate this communication. The communication is conducted according to a master/slave mode. A decoder of the home will play the role of master and the other decoders of slaves. A slave decoder will be able to operate only on condition that it exchanges information regularly with its master. This information will typically be encrypted authentication information. The invention offers the means of communication between the decoders. The manner in which this communication is restricted to the home of the subscriber by management of the emission and reception power of the signals will be described.

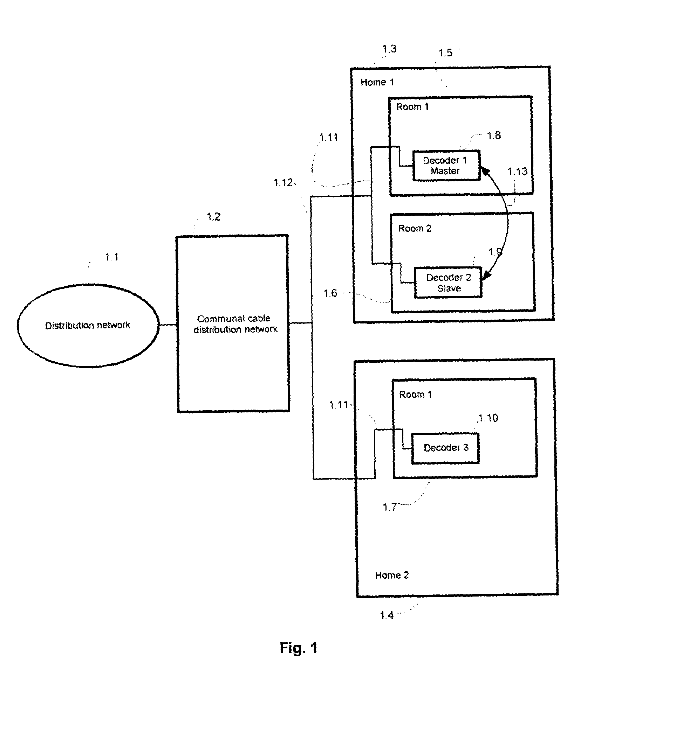

Figure 1 represents the diagram of a typical installation for communal distribution of services which will help us to describe the exemplary embodiment. The services are distributed by a distribution network 1.1 which may be a cable network, a satellite network, a digital terrestrial network or the like. We adopt the standpoint of the case in which a cable network facilitates the distribution of services between several homes. This case occurs naturally in cable-based service distribution networks and in communal distribution networks for satellite and digital terrestrial. Specifically, in this case, a reception dish or antenna will allow the reception of the services which will be distributed by a communal distribution cable network 1.2 within a property or a residential district. This communal distribution cable network arrives via cables 1.12 at the homes 1.3, 1.4 of the subscribers. In the home of the subscribers the services are routed to the various viewing points by cables 1.11 which distribute the signal around the various rooms 1.5, 1.6, 1.7. In these various rooms, decoders 1.8, 1.9, 1.10 allow the decoding of these services for viewing by the subscribers. When a subscriber wants to receive the services in several rooms, this being the case of the home 1 of the diagram, he will utilize two decoders 1.8 and 1.9. These two decoders will establish a communication by way of the cables 1.11 distributing the services around the home. This communication will allow the pairing of the decoders one playing the role of master and the others of slaves. The choice of the decoder playing the role of master may be made in various ways. The simplest manner consists in offering the user a configuration option for the appliance indicating to him whether it is playing this role of master or that of slave. This pairing is symbolized by the arrow 1.13 in the figure. The communication protocol will use the despatching and the receiving of digital frames on the cable by using a low-frequency channel, typically 250 Khz or 1 Mhz, but any frequency that does not disturb the distribution of the services is conceivable. The problem then arises of allowing the pairing of the decoders 1.8 and 1.9 in the home 1.3 without disturbing and above all without allowing the decoder 1.10 to pair up via the cable distribution network 1.2 and the cables 1.12.

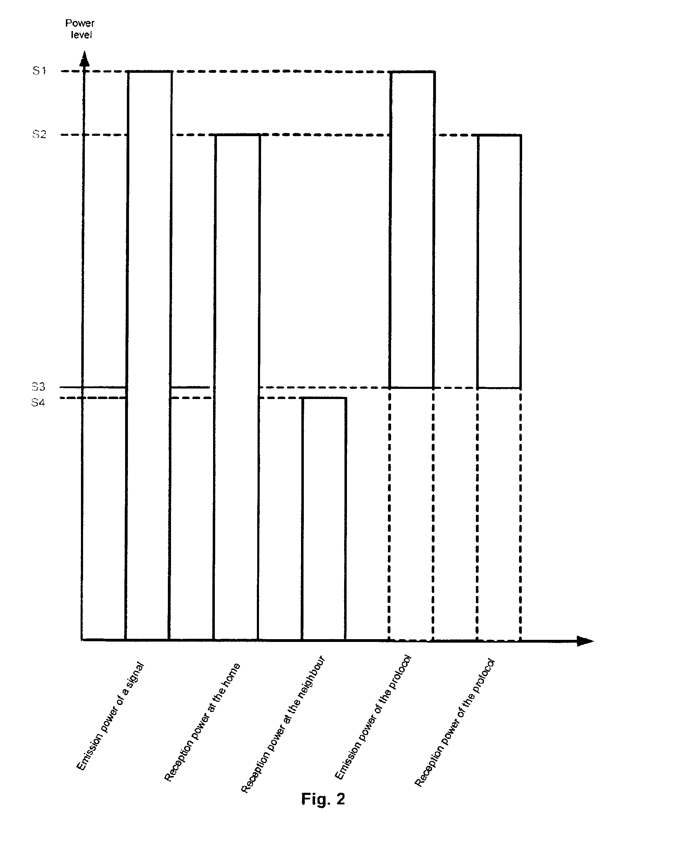

A signal emitted on a cable undergoes attenuation as a function of the length of the cable and of the appliances traversed. Studies have shown that a signal emitted under a certain emission power threshold S1 (typically 83 dBµV) by a decoder in a home will be received at a maximum power S4 (typically 41 dBµV) in a neighbouring home, while it will be received at a maximum power S2 (typically 70 dBµv) in the home of the emitter. From this one concludes that if a threshold S3 (typically 43 dBµV) is fixed at reception, below which threshold signal reception is precluded, then reception in a home of a signal originating from another neighbouring home is precluded. Figure 2 describes these various thresholds. As may be seen therein, first column, a signal emitted with a power of less than S1 is received, second column, at a level of less than S2 in the home and less than S4, third column, in a neighbouring home. From this one therefore deduces that if the emission power is limited between S3 and S1 and the reception power is limited between S3 and S2, only the decoders located in the same home will be able to communicate.

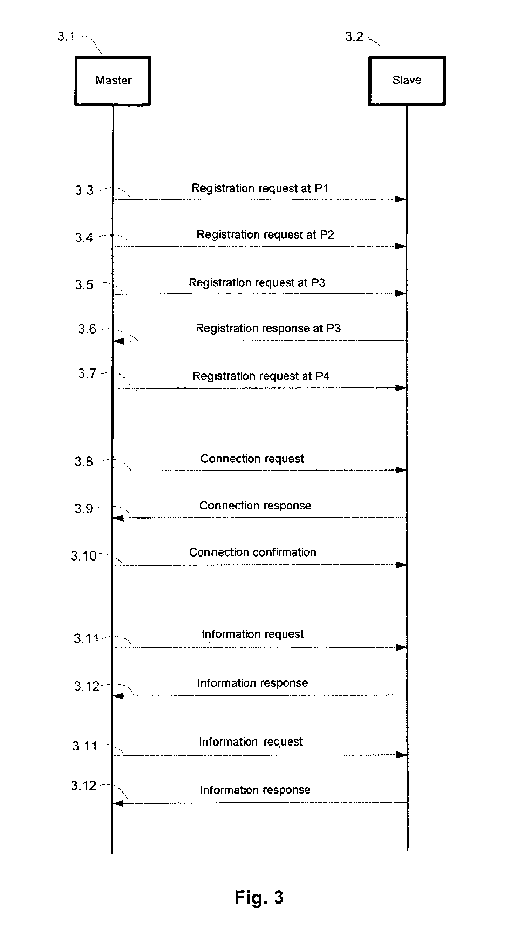

The communication protocol makes provision, firstly, for an initialization phase during which all the slaves present in the home will register with the master. This phase also serves to determine the power level necessary for the communication. The idea is to establish the communication between the master and the slaves by using the minimum power level required out of a certain number of preset levels. We saw that the power level of emission had to lie between a level S3 and a level S1 in order to facilitate communication in the home while preventing communication between two homes. It goes without saying that the lower the emission power level of the messages, the less it will be possible for this communication in the home to be perceived outside the home. The initialization phase comprises the emission by the master of a so-called registration request packet. This registration request will be despatched a first time at a first emission level of typically around S3, reference 3.3 in the drawings. Specifically, an emission level slightly greater than S3 is the minimum emission level whereby it is possible to contemplate reception at a level greater than S3. Any decoder receiving this request will respond thereto via a so-called registration response request. This response will be despatched at the same power level as the registration request. It will contain an identifier of the slave decoder responding to the request. This identifier may be an MAC address, a serial number or else a chip card number. The master will allocate an address to this decoder corresponding to this identifier. The risks of collision on the cable can be minimized by applying a random delay to the response, this delay being kept within a response window fixed by the master in his registration request. The despatching of this connection request at a power level close to the minimum threshold S3 provides us with no guarantee that it was understood by all the decoders present in the home. To facilitate the registration of all of the decoders we shall repeat this registration request 3.4, 3.5 and 3.7 at progressively increasing power levels without ever exceeding the maximum level S1. The emission power level of the connection request is coded in the connection request itself, thereby allowing the slave decoder to emit its registration response 3.6 at the same power level. The response likewise will comprise this power level coded in the response itself. In the case where a slave decoder receives several registration requests at different powers, it will only despatch a response with the emission power level corresponding to the emission power level of the request having the lowest level. At the end of this initialization process, all the decoders present in the home will be known, will have an address allocated by the master and the minimum emission level, P3 in Figure 3, will be known from among the levels used during initialization, at which the communication must be established so as to communicate with all the decoders of the home. This minimum emission level will thereafter be used for all the messages exchanged between the master and the slaves. It is also conceivable to store in the master the minimum level required to communicate with each slave and to use this level in the communication with this slave. This initialization phase will be automatically repeated regularly over time so as to permit the connection of new decoders that might appear in the home.

Once the decoders have been identified during this initialization phase, a connection phase will make it possible to actually open the communication link between the master and the slave. This phase is covered by three types of messages: the connection request 3.8, the connection response 3.9 and the connection confirmation 3.10. The connection request will be despatched by the master to the slave that has just registered. This message will be despatched in broadcast mode and contains the address allocated to the decoder as well as the identifier under which the decoder has made itself known. The decoder which will recognize its identifier will therefore be able to know the address that has been allocated to it. This knowledge allows it, thereafter, to recognize the messages which are intended for it. It responds, with a message, called the connection response, unicast to this connection request. Through this response it indicates to the master that it has been recognized at the level of the identifier transmitted and has accepted the address that has been allocated to it. The master will thereafter confirm this address through a connection confirmation despatched by unicast. On completion of this connection phase, the channel will be open for unicasting between the master and the slave. The addresses of the master and of the slave are confirmed on either side of the connection. By convention the address of the master is always 0x1.

A data exchange process will thereafter be able to be set up between the master and the slaves. The content of the data transmitted, their coding, the transmission frequency are not detailed here. The master having the initiative for any exchange of messages between it and the slaves in this protocol, it will be able to despatch data to the slaves. In the case where it has no data to despatch, it will regularly despatch requests to the slaves to ask them whether they do have data to despatch to it. This is done by despatching an information request 3.11 to a slave, to which the slave will respond with an information response 3.12. Each of these messages may or may not contain useful information. In all cases, the protocol demands an exchange of such packets, if need be empty of useful data, regularly.

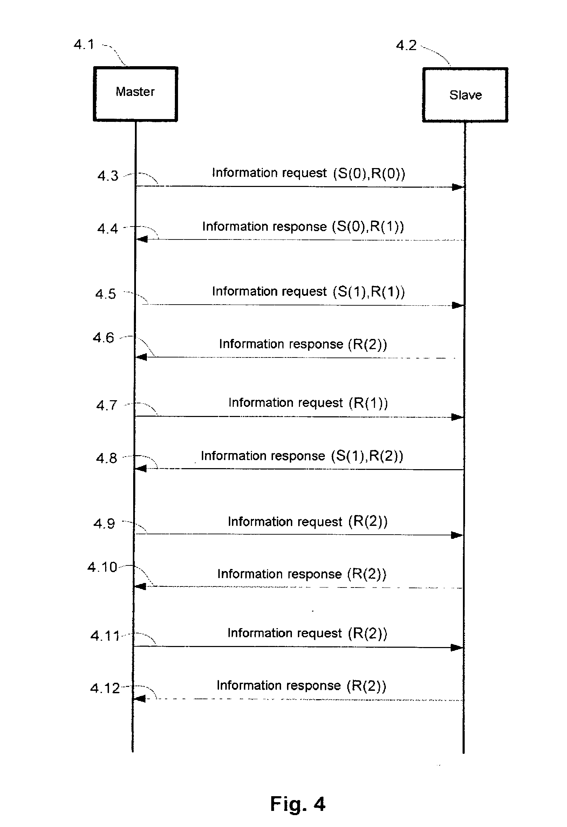

A stream control system is also implemented during these exchanges of packets. This system is composed of two registers in the packets, called S and R. The register S is a register with 3 bits defining the number of the packet despatched, while the register R, likewise 3 bits, indicates the number of the next packet expected. Only packets containing useful data contain a significant register S. On the other hand all the packets contain a register R. An exemplary communication portraying the registers in question is shown in Figure 4. This depicts a first packet 4.3, this packet transports information and is numbered 0 via the register S. Since no message has yet been received on the part of the peer, the register R indicates that the message numbered 0 is awaited. The message 4.4 numbered 0 is received in response, awaiting a next message numbered 1. The message 4.5 is numbered 1 and indicates that the master is waiting for a message numbered 1 from the slave. The message 4.6 contains no information and therefore no significant register S. On the other hand, it nevertheless signals that the next message expected by the slave is the message numbered 2. The message 4.7 has the same significance, nothing is transmitted and message 1 is awaited. This message arrives in the form of the message 4.8, numbered 1 and indicating that the slave is awaiting a message numbered 2. The subsequent messages contain no information and therefore merely indicate the number of the next message that the master or the slave are waiting for.

The end of the connection is managed by the master. It may arrive for four distinct reasons. It may arrive because it is requested by the application or on expiry of time counters (timeout) while waiting for a connection response or an information response. A fourth case consisting of unexpected errors is also envisaged. When one of these conditions occurs, a message called a release request is despatched by the master to the slave. This request may be despatched either to a given slave or in broadcast mode to all the slaves. The slaves involved in the request must respond with a message called the release response. Such a phase giving rise to ends of connections must necessarily be followed by an initial ization phase allowing the slaves to reconnect. Specifically, a valid connection must be maintained between the master and the slaves.

The invention described here within the framework of decoders of multimedia services receiving these services by way of a distribution network is not limited to this framework. Specifically, this type of protocol may be implemented in any type of domestic appliance provided that several appliances can be linked by a cable making it possible to establish a communication.

## Claims

1. Method of establishing a communication between a first appliance (1.8), and at least one second appliance (1.9), the first appliance and the at least one second appliance being linked by a cable network (1.12) within a first zone (1.3), this cable network being connected to a second zone (1.4) such that signals emitted by an appliance within the first zone can be detected in the second zone, a communication being established by modulating a signal representing a digital message on the cable, **characterized in that** the method comprises the following steps, implemented by said first appliance:
- an emission of at least one registration request (3.3, 3.4, 3.5, 3.7) dispatched according to a mode of broadcasting on the cable, at at least one emission power level higher than a second threshold (S3) and lower than a first threshold (S1), the emission power level being indicated in the request;
- a reception of at least one registration response (3.6) despatched by the at least one second appliance (1.9) within the first zone in response to the at least one registration request
- such that any message dispatched at a power level equal to said first threshold (S1) by the first appliance (1.8) sees the maximum power level with which it can be received, by an appliance situated in the second zone (1.4), to be less than a third threshold (S4) that is less than said second threshold (S3).

2. Method according to claim 1, **characterized in that** the at least one registration request is sent at increasing power levels.

3. Method according to Claims 1 and 2, **characterized in that** it comprises, a step of choosing the emission power of the at least one registration request despatched to the at least one second appliance registered as a function of the emission power levels of the registration responses received.

4. Method according to any of claims 1 to 3, **characterized in that** a minimum level of transmission is used for communication with the at least one second appliance, the minimum level of transmission corresponding to the power level associated to a registration response transmitted by the at least one second appliance.

5. Method according to any of claims 1 to 3, **characterized in that** a minimum level of transmission is used for communication with the at least one second appliance, the minimum level of transmission corresponding to the minimum power level associated to a registration response transmitted by the at least one second appliance, so as to communicate with all the at least one second appliance.

6. Method according to any of claims 1 to 5, **characterized in that** the at least one registration response comprises an emission power level of the corresponding connection request.

7. Method according to any of claims 1 to 6, **characterized in that** it comprises an exclusive consideration by the at least one second appliance of the at least one registration request received at a power level greater than the second threshold (S3) such that any registration request despatched at a power level equal to the first threshold (S1) by an appliance situated in the first zone is received by an appliance situated in the second zone with a maximum power level that is less than the third threshold (S4) that is less than the second threshold (S3).

8. Method of establishing a communication between a first appliance (1.8), and at least one second appliance (1.9), the first appliance and the at least one second appliance being linked by a cable network (1.12) within a first zone (1.3), this cable network being connected to a second zone (1.4) such that signals emitted by an appliance within the first zone can be detected in the second zone, a communication being established by modulating a signal representing a digital message on the cable, **characterized in that** the method comprises the following steps, implemented by the at least one second appliance:
- a reception of at least one registration request (3.3, 3.4, 3.5, 3.7) dispatched by the first appliance according to a mode of broadcasting on the cable, at at least one emission power level higher than a second threshold (S3) and lower than a first threshold (S1), the emission power level being indicated in the request;
- a consideration, by said at least one second appliance (1.9), of said at least one registration request (3.3, 3.4, 3.5, 3.7) on the ground that said at least one registration request (3.3, 3.4, 3.5, 3.7) being received at a power level greater than said second threshold (S3) such that any message dispatched at a power level equal to said first threshold (S1) by an appliance situated in said first zone (1.3) sees a maximum power level with which it can be received, by an appliance situated in the second zone (1.4), to be less than a third threshold (S4) that is less than said second threshold (S3);
- a dispatching of at least one registration response (3.6) in response to the at least one registration request.

9. Method according to claim 8, **characterized in that** the at least one registration response comprises an emission power level of the corresponding connection request.

10. Method according to any of claims 8 and 9, **characterized in that** it comprises an exclusive consideration by the at least one second appliance of the at least one registration request received at a power level greater than the second threshold (S3) such that any registration request despatched at a power level equal to the first threshold (S1) by an appliance situated in the first zone is received by an appliance situated in the second zone with a maximum power level that is less than the third threshold (S4) that is less than the second threshold (S3).

## Patentansprüche

1. Verfahren zum Herstellen einer Kommunikation zwischen einem ersten Gerät (1.8) und mindestens einem zweiten Gerät (1.9), wobei das erste Gerät und das mindestens eine zweite Gerät durch ein Kabelnetz (1.12) innerhalb einer ersten Zone (1.3) verknüpft sind, wobei dieses Kabelnetz mit einer zweiten Zone (1.4) verbunden ist, sodass durch ein Gerät innerhalb der ersten Zone emittierte Signale in der zweiten Zone erfasst werden können, wobei durch Modulieren eines Signals, das eine digitale Nachricht repräsentiert, auf dem Kabel eine Kommunikation hergestellt wird, **dadurch gekennzeichnet, dass** das Verfahren die folgenden durch das erste Gerät implementierten Schritte umfasst:
- Aussenden mindestens einer Registrierungsanforderung (3.3, 3.4, 3.5, 3.7), die in Übereinstimmung mit einer Sendebetriebsart auf dem Kabel abgesendet wird, wobei mindestens ein Emissionsleistungspegel höher als ein zweiter Schwellenwert (S3) und niedriger als ein erster Schwellenwert (S1) ist, wobei der Emissionsleistungspegel in der Anforderung angegeben ist;
- Empfangen mindestens einer Registrierungsantwort (3.6), die durch das mindestens eine zweite Gerät (1.9) innerhalb der ersten Zone in Reaktion auf die mindestens eine Registrierungsanforderung abgesendet wird;
- sodass irgendeine Nachricht, die mit einem Leistungspegel gleich dem ersten Schwellenwert (S1) durch das erste Gerät (1.8) abgesendet wird, den maximalen Leistungspegel, mit dem sie durch ein Gerät, das sich in der zweiten Zone (1.4) befindet, empfangen werden kann, als kleiner als einen dritten Schwellenwert (S4), der kleiner als der zweite Schwellenwert (S3) ist, sieht.

2. Verfahren nach Anspruch 1, **dadurch gekennzeichnet, dass** die mindestens eine Registrierungsanforderung mit zunehmenden Leistungspegeln gesendet wird.

3. Verfahren nach Anspruch 1 und 2, **dadurch gekennzeichnet, dass** es einen Schritt des Wählens der Emissionsleistung der mindestens einen zu dem mindestens einen zweiten registrierten Gerät abgesendeten Registrierungsanforderung als eine Funktion der Emissionsleistungspegel der empfangenen Registrierungsantworten umfasst.

4. Verfahren nach einem der Ansprüche 1 bis 3, **dadurch gekennzeichnet, dass** für die Kommunikation mit dem mindestens einen zweiten Gerät ein minimaler Sendepegel verwendet wird, wobei der minimale Sendepegel dem Leistungspegel entspricht, der einer durch das mindestens eine zweite Gerät gesendeten Registrierungsantwort zugeordnet ist.

5. Verfahren nach einem der Ansprüche 1 bis 3, **dadurch gekennzeichnet, dass** für die Kommunikation mit dem mindestens einen zweiten Gerät ein minimaler Sendepegel verwendet wird, wobei der minimale Sendepegel dem minimalen Leistungspegel entspricht, der einer durch das mindestens eine zweite Gerät gesendeten Registrierungsantwort zugeordnet ist, um mit allen der mindestens einen zweiten Geräte zu kommunizieren.

6. Verfahren nach einem der Ansprüche 1 bis 5, **dadurch gekennzeichnet, dass** die mindestens eine Registrierungsantwort einen Emissionsleistungspegel der entsprechenden Verbindungsanforderung umfasst.

7. Verfahren nach einem der Ansprüche 1 bis 6, **dadurch gekennzeichnet, dass** es eine ausschließliche Betrachtung der mindestens einen mit einem höheren Leistungspegel als dem zweiten Schwellenwert (S3) empfangenen Registrierungsanforderung durch das mindestens eine zweite Gerät umfasst, sodass irgendeine Registrierungsanforderung, die mit einem Leistungspegel gleich dem ersten Schwellenwert (S1) durch ein Gerät, das sich in der ersten Zone befindet, abgesendet wird, durch ein Gerät, das sich in der zweiten Zone befindet, mit einem maximalen Leistungspegel, der kleiner als der dritte Schwellenwert (S4) ist, der kleiner als der zweite Schwellenwert (S3) ist, empfangen wird.

8. Verfahren zum Herstellen einer Kommunikation zwischen einem ersten Gerät (1.8) und mindestens einem zweiten Gerät (1.9), wobei das erste Gerät und das mindestens eine zweite Gerät durch ein Kabelnetz (1.12) innerhalb einer ersten Zone (1.3) verknüpft sind, wobei dieses Kabelnetz mit einer zweiten Zone (1.4) verbunden ist, sodass durch ein Gerät innerhalb der ersten Zone emittierte Signale in der zweiten Zone erfasst werden können, wobei durch Modulieren eines Signals, das eine digitale Nachricht repräsentiert, auf dem Kabel eine Kommunikation hergestellt wird, **dadurch gekennzeichnet, dass** das Verfahren die folgenden durch das mindestens eine zweite Gerät implementierten Schritte umfasst:
- Empfangen mindestens einer Registrierungsanforderung (3.3, 3.4, 3.5, 3.7), die durch das erste Gerät in Übereinstimmung mit einer Sendebetriebsart auf dem Kabel abgesendet wird, wobei mindestens ein Emissionsleistungspegel höher als ein zweiter Schwellenwert (S3) und niedriger als ein erster Schwellenwert (S1) ist, wobei der Emissionsleistungspegel in der Anforderung angegeben ist;
- Betrachten der mindestens einen Registrierungsanforderung (3.3, 3.4, 3.5, 3.7) aufgrund dessen, dass die mindestens eine Registrierungsanforderung (3.3, 3.4, 3.5, 3.7) mit einem höheren Leistungspegel als dem zweiten Schwellenwert (S3) empfangen wird, durch das mindestens eine zweites Gerät (1.9), sodass irgendeine Nachricht, die mit einem Leistungspegel gleich dem ersten Schwellenwert (S1) durch ein Gerät, das sich in der ersten Zone (1.3) befindet, abgesendet wird, einen maximalen Leistungspegel, mit dem sie durch ein Gerät, das sich in der zweiten Zone (1.4) befindet, empfangen werden kann, als kleiner als einen dritten Schwellenwert (S4), der kleiner als der zweite Schwellenwert (S3) ist, sieht;
- Absenden mindestens einer Registrierungsantwort (3.6) in Reaktion auf die mindestens eine Registrierungsanforderung.

9. Verfahren nach Anspruch 8, **dadurch gekennzeichnet, dass** die mindestens eine Registrierungsantwort einen Emissionsleistungspegel der entsprechenden Verbindungsanforderung umfasst.

10. Verfahren nach einem der Ansprüche 8 und 9, **dadurch gekennzeichnet, dass** es eine ausschließliche Betrachtung der mindestens einen Registrierungsanforderung, die mit einem höheren Leistungspegel als dem zweiten Schwellenwert (S3) empfangen wird, durch das mindestens eine zweite Gerät umfasst, sodass irgendeine Registrierungsanforderung, die mit einem Leistungspegel gleich dem ersten Schwellenwert (S1) durch ein Gerät, das sich in der ersten Zone befindet, abgesendet wird, durch ein Gerät, das sich in der zweiten Zone befindet, mit einem maximalen Leistungspegel, der kleiner als der dritte Schwellenwert (S4) ist, der kleiner als der zweite Schwellenwert (S3) ist, empfangen wird.

## Revendications

1. Méthode d'établissement d'une communication entre un premier appareil (1.8), et au moins un second appareil (1.9), le premier appareil et l'au moins un second appareil étant reliés par un réseau câblé (1.12) au sein d'une première zone (1.3), ce réseau câblé étant connecté au niveau d'une seconde zone (1.4) telle que les signaux émis par un appareil de la première zone puissent être détectés dans la seconde zone, une communication étant établie par modulation d'un signal représentant un message numérique sur le câble, **caractérisée en ce que** la méthode comporte les étapes suivantes, mises en oeuvre par le premier appareil :
- l'émission d'au moins une requête d'enregistrement (3.3, 3.4, 3.5, 3.7) selon un mode de diffusion générale sur le câble, à au moins un niveau de puissance d'émission supérieur à un second seuil (S3) et inférieur à un premier seuil (S1), le niveau de puissance d'émission étant indiqué dans la requête ;
- la réception d'au moins une réponse d'enregistrement (3.6) envoyée par l'au moins un second appareil (1.9) de la première zone en réponse à l'au moins une requête d'enregistrement ;
- tel que tout message envoyé à un niveau de puissance égal au premier seuil (S1) par le premier appareil (1.8) voit le niveau de puissance maximum avec lequel il puisse être reçu, par un appareil situé dans la seconde zone (1.4), être inférieur à un troisième seuil (S4) inférieur au second seuil (S3).

2. Méthode selon la revendication 1 **caractérisée en ce que** l'au moins une requête d'enregistrement est émise à des niveaux de puissance augmentant.

3. Méthode selon l'une des revendications 1 et 2, **caractérisée en ce que** la méthode comprend une étape de choix de la puissance d'émission de l'au moins une requête d'enregistrement envoyée à l'au moins un second appareil enregistré en fonction des niveaux de puissance d'émission des réponses d'enregistrement reçues.

4. Méthode selon l'une quelconque des revendications 1 à 3, **caractérisée en ce qu'**un niveau minimum de transmission est utilisé pour communication avec l'au moins un second appareil, le niveau minimum de transmission correspondant au niveau de puissance associé à une réponse d'enregistrement transmise par l'au moins un second appareil.

5. Méthode selon l'une quelconque des revendications 1 à 3, **caractérisée en ce qu'**un niveau minimum de transmission est utilisé pour communication avec l'au moins un second appareil, le niveau minimum de transmission correspondant au niveau de puissance minimum associé à une réponse d'enregistrement transmise par l'au moins un second appareil, pour communiquer avec tous les au moins un second appareil.

6. Méthode selon l'une quelconque des revendications 1 à 5, **caractérisée en ce que** l'au moins une réponse d'enregistrement comprend un niveau de puissance d'émission de la requête de connexion correspondante.

7. Méthode selon l'une quelconque des revendications 1 à 6, **caractérisée en ce que** la méthode comprend une considération exclusive par l'au moins un second appareil de l'au moins une requête d'enregistrement reçue à un niveau de puissance supérieur au deuxième seuil (S3) tel que toute requête d'enregistrement envoyée à un niveau de puissance égal au premier seuil (S1) par un appareil situé dans le première zone est reçue par un appareil situé dans la seconde zone à un niveau de puissance maximal qui est inférieur au troisième seuil (S4) inférieur au second seul (S3).

8. Méthode d'établissement d'une communication entre un premier appareil (1.8), et au moins un second appareil (1.9), le premier appareil et l'au moins un second appareil étant reliés par un réseau câblé (1.12) au sein d'une première zone (1.3), ce réseau câblé étant connecté au niveau d'une seconde zone (1.4) telle que les signaux émis par un appareil de la première zone puissent être détectés dans la seconde zone, une communication étant établie par modulation d'un signal représentant un message numérique sur le câble, **caractérisée en ce que** la méthode comporte les étapes suivantes, mises en oeuvre par l'au moins un second appareil :
- réception d'au moins une requête d'enregistrement (3.3, 3.4, 3.5, 3.7) envoyée par le premier appareil selon un mode de diffusion générale sur le câble, à au moins un niveau de puissance d'émission supérieur à un second seuil (S3) et inférieur à un premier seuil (S1), le niveau de puissance d'émission étant indiqué dans la requête ;
- la considération, par l'au moins un second appareil (1.9), de l'au moins une requête d'enregistrement (3.3, 3,4, 3.5, 3.7) sur base de réception de l'au moins une requête d'enregistrement à un niveau de puissance supérieur au second seuil (S3) tel que tout message envoyé à un niveau de puissance égal au premier seuil (S1) par un appareil situé dans la première zone (1.3) voit le niveau de puissance maximum avec lequel il puisse être reçu, par un appareil situé dans la seconde zone (1.4), être inférieur à un troisième seuil (S4) inférieur au second seuil (S3) ;
- l'émission d'au moins une réponse d'enregistrement (3.6) en réponse à l'au moins une requête d'enregistrement.

9. Méthode selon la revendication 8, **caractérisée en ce que** l'au moins une réponse d'enregistrement comprend un niveau de puissance d'émission de la requête de connexion correspondante.

10. Méthode selon l'une quelconque des 8 et 9, **caractérisée en ce que** la méthode comprend une considération exclusive par l'au moins un second appareil de l'au moins une requête d'enregistrement reçue à un niveau de puissance supérieur au second seuil (S3) tel que toute requête d'enregistrement envoyée à un niveau de puissance égal au premier seuil (S1) par un appareil situé dans la première zone est reçue par un appareil situé dans la seconde zone à un niveau de puissance maximal qui est inférieur au troisième seuil (S4) inférieur au second seul (S3).
